# EUROPEAN PATENT APPLICATION

(11) **EP 4 842 061 A1**
(43) Date of publication of application: **18.11.2026**
(21) Application number: 25755181.2
(22) Date of filing: 14.02.2025
(51) Int. Cl.: H04W 36/00, H04W 36/08

(54) **METHOD AND APPARATUS FOR INTER-CU L1/L2 LAYER-BASED MOBILITY FOR SECONDARY CELL GROUP IN NEXT GENERATION MOBILE COMMUNICATION SYSTEM**

(30) Priority: 15.02.2024 KR 20240021951
(71) Applicant: Samsung Electronics Co., Ltd., Suwon-si, Gyeonggi-do 16677 (KR)
(72) Inventor: HWANG, June, Suwon-si, Gyeonggi-do 16677 (KR); BAE, Beomsik, Suwon-si, Gyeonggi-do 16677 (KR); OCK, Jinwoo, Suwon-si, Gyeonggi-do 16677 (KR); JIN, Seungri, Suwon-si, Gyeonggi-do 16677 (KR)
(74) Representative: Gulde & Partner
(86) International application number: PCT/KR2025/099364
(87) International publication number: WO 2025/174184

(57) **Abstract**

The present disclosure relates to a method and an apparatus for inter-central unit(CU) L1/L2 layer-based mobility (LTM) for a secondary cell group (SCG). The method performed by a source master node (S-MN) comprises the steps of: receiving, from a CU of a candidate secondary node (C-SN), SCG configuration information of LTM candidate PSCells corresponding to each CU of the C-SN; transmitting, to a terminal, an RRC reconfiguration message including the SCG configuration information and master cell group (MCG) configuration information; and receiving, from the terminal, an MN RRC reconfiguration complete message on the basis of the message.

## Description

### [Technical Field]

The disclosure relates to operations of a terminal and a base station in a mobile communication system. More specifically, the disclosure relates to a technology for mobility between terminals.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to effectively provide these services.

### [Disclosure of Invention]

### [Technical Problem]

As a UE moves, the UE may perform a handover operation from a source cell to a target cell. During the handover operation, a network may instruct to the UE to use a favorable beam in the target cell, based on a specific beam.

From a network perspective, this L1/L2 triggered cell switch operation is structured such that a distributed unit (DU) issues a command. Accordingly, mobility of the UE has been guaranteed only between DUs connected to a single CU.

To solve the aforementioned problem, the disclosure proposes a method and an apparatus for enabling a UE to perform a cell switch even to a cell of an inter-CU by exchanging information required for mobility of the UE among a source CU, a target CU, and DUs associated with each CU. Particularly, in a case of an SN, the disclosure specifically proposes a signaling scheme between a source SN-CU and a candidate SN-CU.

The technical subjects pursued in the disclosure are not limited to the above-mentioned technical subjects, and other technical subjects which are not mentioned herein may be clearly understood from the following description by those skilled in the art to which the disclosure pertains.

### [Solution to Problem]

To solve the foregoing problems, the disclosure provides a method performed by a source master node (S-MN) in a communication system including: receiving, from a central unit (CU) of at least one candidate secondary node (C-SN), secondary cell group (SCG) configuration information of a layer 1 (L1)/layer 2 (L2) triggered mobility (LTM) candidate primary secondary cell (PSCell) corresponding to each CU of the at least C-SN; generating and transmitting, to a UE, a first radio resource control (RRC) reconfiguration message including the SCG configuration information of the LTM candidate PSCell corresponding to each CU of the at least one C-SN and master cell group (MCG) configuration information; and receiving, from the UE, an MN RRC reconfiguration complete message including an SN RRC reconfiguration complete message, based on the RRC reconfiguration message.

To solve the foregoing problems, the disclosure provides a method performed by a UE in a communication system including: receiving, from a source master node (S-MN), a first radio resource control (RRC) reconfiguration message including secondary cell group (SCG) configuration information of a layer 1 (L1)/layer 2 (L2) triggered mobility (LTM) candidate primary secondary cell (PSCell) corresponding to each central unit (CU) of at least one candidate secondary node (C-SN) and master cell group (MCG) configuration information; and transmitting, to a CU of S-MN, an MN RRC reconfiguration complete message including an SN RRC reconfiguration complete message, based on the RRC reconfiguration message.

To solve the foregoing problems, the disclosure provides a method performed by a source master node (S-MN) in a communication system, wherein the S-MN includes: a transceiver configured to transmit and receive a signal; and a controller, and the controller is configured to: receive, from a central unit (CU) of at least one candidate secondary node (C-SN), secondary cell group (SCG) configuration information of a layer 1 (L1)/layer 2 (L2) triggered mobility (LTM) candidate primary secondary cell (PSCell) corresponding to each CU of the at least C-SN; generate and transmit, to a UE, a first radio resource control (RRC) reconfiguration message including the SCG configuration information of the LTM candidate PSCell corresponding to each CU of the at least one C-SN and master cell group (MCG) configuration information; and receive, from the UE, an MN RRC reconfiguration complete message including an SN RRC reconfiguration complete message, based on the RRC reconfiguration message.

To solve the foregoing problems, the disclosure provides a source master node (S-MN) in a communication system including: a transceiver configured to transmit and receive a signal; and a controller, wherein the controller is configured to: receive, from a central unit (CU) of at least one candidate secondary node (C-SN), secondary cell group (SCG) configuration information of a layer 1 (L1)/layer 2 (L2) triggered mobility (LTM) candidate primary secondary cell (PSCell) corresponding to each CU of the at least C-SN; generate and transmit, to a UE, a first radio resource control (RRC) reconfiguration message including the SCG configuration information of the LTM candidate PSCell corresponding to each CU of the at least one C-SN and master cell group (MCG) configuration information; and receive, from the UE, an MN RRC reconfiguration complete message including an SN RRC reconfiguration complete message, based on the RRC reconfiguration message.

To solve the foregoing problems, the disclosure provides a UE in a communication system including: a transceiver configured to transmit and receive a signal; and a controller, wherein the controller is configured to: receive, from a source master node (S-MN), a first radio resource control (RRC) reconfiguration message including secondary cell group (SCG) configuration information of a layer 1 (L1)/layer 2 (L2) triggered mobility (LTM) candidate primary secondary cell (PSCell) corresponding to each central unit (CU) of at least one candidate secondary node (C-SN) and master cell group (MCG) configuration information; and transmit, to a CU of S-MN, an MN RRC reconfiguration complete message including an SN RRC reconfiguration complete message, based on the RRC reconfiguration message.

### [Advantageous Effects of Invention]

According to an embodiment of the disclosure, a UE may not experience communication interruption when moving to another cell.

Advantageous effects obtainable from the disclosure are not limited to the above-mentioned effects, and other effects which are not mentioned herein may be clearly understood from the following description by those skilled in the art to which the disclosure pertains.

### [Brief Description of Drawings]

FIG. 1 illustrates a structure of a long term evolution (LTE) system according to an embodiment of the disclosure.
FIG. 2 illustrates a radio protocol structure of a long term evolution (LTE) system according to an embodiment of the disclosure.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 is a block diagram illustrating an internal structure of a UE according to an embodiment of the disclosure;
FIG. 6 is a block diagram illustrating a structure of a new radio (NR) base station according to an embodiment of the disclosure.
FIG. 7A is a diagram illustrating an inter-central unit (CU) secondary cell group (SCG) L1/L2 triggered mobility (LTM) operation according to an embodiment of the disclosure.
FIG. 7B is a diagram illustrating an inter-central unit (CU) secondary cell group (SCG) L1/L2 triggered mobility (LTM) operation according to an embodiment of the disclosure.
FIG. 8 is a diagram illustrating the structure of a radio resource control (RRC) reconfiguration message according to an embodiment of the disclosure.

### [Mode for the Invention]

Hereinafter, the operation principle of the disclosure will be described in detail with reference to the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Accordingly, the definitions thereof should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

Hereinafter, the operation principle of the disclosure will be described in detail with reference to the accompanying drawings. The terms which will be described below are terms defined in consideration of the functions in the disclosure. Theses terms may be different according to users, intentions of the users, or customs, and their definitions should be made based on the contents throughout the specification.

For the same reason, some components in the accompanying drawings are illustrated in an exaggerated, omitted, or schematic manner. In addition, the sizes of respective components do not entirely reflect their actual sizes.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Specific terms used in the following description are provided to help understanding the disclosure, and the use of such specific terms may be changed into other forms without departing from the technical spirit of the disclosure.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

As used hereinafter, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. As used herein, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. Moreover, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

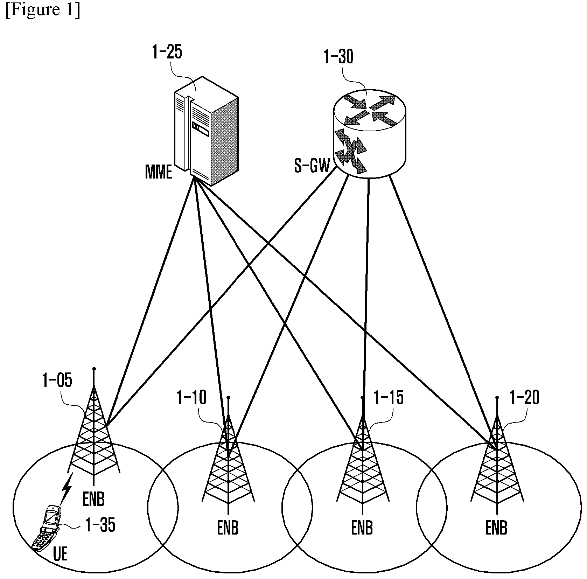

FIG. 1 illustrates a structure of a long term evolution (LTE) system according to an embodiment of the disclosure.

Referring to FIG. 1, as illustrated therein, a radio access network of a long term evolution (LTE) system may include next-generation base stations (evolved Node Bs, hereinafter ENBs, eNBs, Node Bs, or base stations) 1-05, 1-10, 1-15, and 1-20, a mobility management entity (MME) 1-25, and a serving gateway (S-GW) 1-30. A user equipment (hereinafter UE or terminal) 1-35 may access an external network through the ENBs 1-05 to 1-20 and the S-GW 1-30.

In FIG. 1, the ENBs 1-05 to 1-20 may each correspond to a conventional Node B of the UMTS system. The ENBs 1-05 to 1-20 are connected to the UE 1-35 through a radio channel, and perform more complicated roles than the conventional node Bs. In the LTE system, since all user traffic including real-time services, such as voice over IP (VoIP) via the Internet protocol, may be serviced through a shared channel. Thus, a device that collects state information, such as buffer states, available transmit power states, and channel states of UEs 1-35, and performs scheduling accordingly is required, and the ENBs 1-05 to 1-20 may serve as the device. In general, one ENB 1-05 to 1-20 may control multiple cells. For example, in order to implement a transfer rate of 100Mbps, the LTE system may use orthogonal frequency division multiplexing (OFDM) as a radio access technology in a bandwidth of, for example, 20MHz. Furthermore, the LTE system may employ an adaptive modulation & coding (AMC) scheme for determining a modulation scheme and a channel coding rate according to a channel state of a UE. The S-GW 1-30 is a device that provides a data bearer, and may generate or remove a data bearer under the control of the MME 1-25. The MME is a device responsible for various control functions as well as a mobility management function for a UE, and may be connected to multiple base stations.

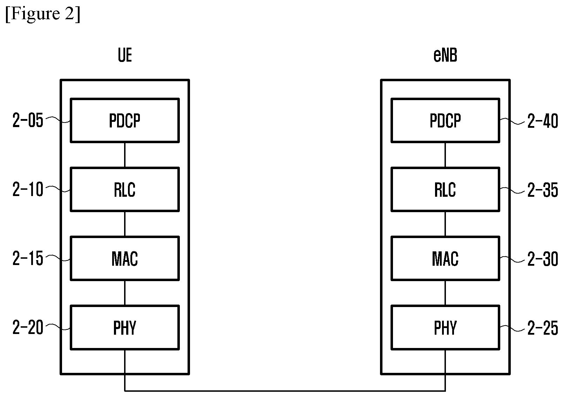

FIG. 2 illustrates a radio protocol structure of a long term evolution (LTE) system according to an embodiment of the disclosure.

Referring to FIG. 2, a radio protocol of an LTE system may include a packet data convergence protocol (PDCP) 2-05 or 2-40, a radio link control (RLC) 2-10 or 2-35, and a medium access control (MAC) 2-15 or 2-30 on each of UE and ENB sides. The PDCP 2-05 or 2-40 serves to perform operations such as IP header compression/reconstruction. The main functions of the PDCP 2-05 or 2-40 may be summarized as follows.
- Header compression and decompression: robust header compression: (ROHC) only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (RLC) 2-10 or 2-35 may reconfigure a PDCP protocol data unit (PDU) into appropriate sizes to perform an ARQ operation. The main functions of the RLC 2-10 or 2-35 may be summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 2-15 or 2-30 may be connected to several RLC layer devices configured in a single UE, and perform an operation of multiplexing RLC PDUs into an MAC PDU and demultiplexing RLC PDUs from an MAC PDU. The main functions of the MAC 2-15 or 2-30 are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 2-20 or 2-25 may perform operations of channel-coding and modulating upper layer data, thereby obtaining OFDM symbols, and delivering the same through a radio channel, or demodulating OFDM symbols received through the radio channel, channel-decoding the same, and delivering the same to the higher layer.

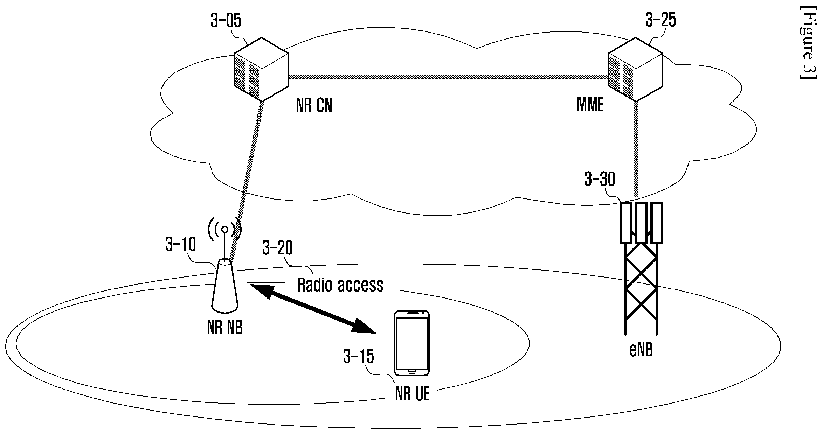

FIG. 3 illustrates a structure of a next-generation mobile communication system according to an embodiment of the disclosure.

Referring to FIG. 3, a radio access network of a next-generation mobile communication system (hereinafter NR, or 5G) may include a new radio Node B (hereinafter NR gNB, gNB, or NR base station) 3-10, and a new radio core network (NR CN) 3-05. A new radio user equipment (NR UE or terminal) 3-15 may access an external network via the NR gNB 3-10 and the NR CN 3-05.

In FIG. 3, the NR gNB 3-10 may correspond to an evolved Node B (eNB) of the conventional LTE system. The NR gNB 3-10 may be connected to the NR UE 3-15 through a radio channel and may provide outstanding services as compared to a conventional Node B. In the next-generation mobile communication system, since all user traffic may be serviced through a shared channel. Therefore, a device that collects state information, such as buffer states, available transmit power states, and channel states of UEs 3-15, and performs scheduling accordingly is required, and the NR gNB 3-10 may be responsible for the scheduling. In general, one NR gNB 3-10 may control multiple cells. In order to implement ultrahigh-speed data transfer beyond the normal LTE, the next-generation mobile communication system may provide a wider bandwidth than the typical maximum bandwidth. In addition, the next-generation mobile communication system may employ an orthogonal frequency division multiplexing (OFDM) as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE. The NR CN 3-05 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the existing LTE system, and the NR CN may be connected to an MME 3-25 via a network interface. The MME may be connected to an eNB 3-30 that is an LTE base station.

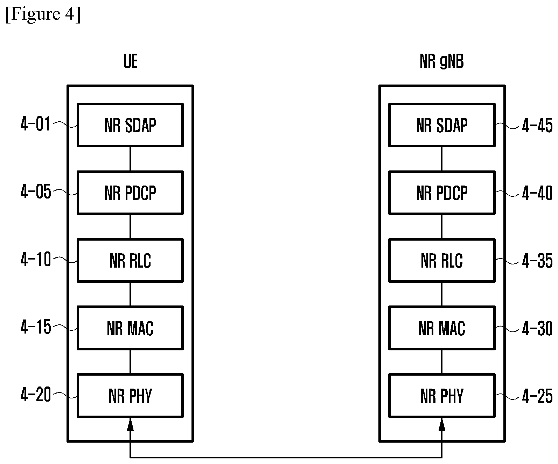

FIG. 4 illustrates a radio protocol structure of a next-generation mobile communication system according to an embodiment of the disclosure.

Referring to FIG. 4, a radio protocol of a next-generation mobile communication system may include an NR service data adaptation protocol (SDAP) 4-01 or 4-45, an NR PDCP 4-05 or 4-40, an NR RLC 4-10 or 4-35, an NR MAC 4-15 or 4-30, and an NR PHY 4-20 or 4-25 on each of UE and NR gNB sides.

The main functions of the NR SDAP 4-01 or 4-45 may include some of functions below.
Transfer of user plane data
Mapping between a QoS flow and a DRB for both DL and UL
Marking QoS flow ID in both DL and UL packets
Reflective QoS flow to DRB mapping for the UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating QoS. QoS information may be used as data processing priority, scheduling information, etc. to support desired services.

The main functions of the NR PDCP 4-05 or 4-40 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

Among the above-mentioned functions, the reordering of the NR PDCP device may refer to a function of reordering PDCP PDUs received from a lower layer in an order based on the PDCP sequence number (SN). The reordering of the NR PDCP device may include a function of delivering data to a higher layer in the reordered sequence or may include a function of directly delivering data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC 4-10 or 4-35 may include some of functions below.
- Transfer of upper layer PDUs
- In-sequence delivery of upper layer PDUs
- Out-of-sequence delivery of upper layer PDUs
- ARQ function (error correction through ARQ)
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

Among the above-described functions, the in-sequence delivery of the NR RLC device may refer to a function of delivering RLC SDUs, received from the lower layer, to the upper layer in sequence. The in-sequence delivery of the NR RLC device may include at least one of a function of, if multiple RLC SDUs, into which one original RLC SDU has been segmented, are received, reassembling the RLC SDUs and delivering the reassembled RLC SDUs.

The in-sequence delivery of the NR RLC device may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs.

The in-sequence delivery function of the NR RLC entity may include a function of sequentially delivering, to an upper layer, only RLC SDUs preceding a lost RLC SDU when an RLC SDU is lost.

The in-sequence delivery of the NR RLC device may include a function of, if a predetermined timer has expired although there is a lost RLC SDU, successively delivering all RLC SDUs received before the timer was started to the higher layer.

The in-sequence delivery of the NR RLC device may include a function of, if a predetermined timer has expired although there is a lost RLC SDU, successively delivering all RLC SDUs received until now to the higher layer.

The NR RLC device may process RLC PDUs in a reception sequence, regardless of a sequence based on sequence numbers (out-of-sequence delivery). and then deliver the processed RLC PDUs to the NR PDCP device.

If receiving segments, the NR RLC device may receive segments stored in a buffer or to be received later, reconfigure the segments into one whole RLC PDU, and then deliver the RLC PDU to the NR PDCP device.

The NR RLC layer may include no concatenation function, which may be performed in the NR MAC layer or replaced with a multiplexing function of the NR MAC layer.

Among the above-mentioned functions, the out-of-sequence delivery of the NR RLC device may refer to a function of delivering RLC SDUs, received from the lower layer, directly to the higher layer regardless of the sequence. The out-of-sequence delivery function of the NR RLC device may include a function of, if multiple RLC SDUs received, into which one original RLC SDU has been segmented, are received, reassembling and delivering the same. The out-of-sequence delivery function of the NR RLC device may include a function of storing the RLC SN or PDCP SN of received RLC PDUs, and recording RLC PDUs lost as a result of reordering.

The NR MAC 4-15 or 4-30 may be connected to multiple NR RLC layer devices configured in a single UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 4-20 or 4-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

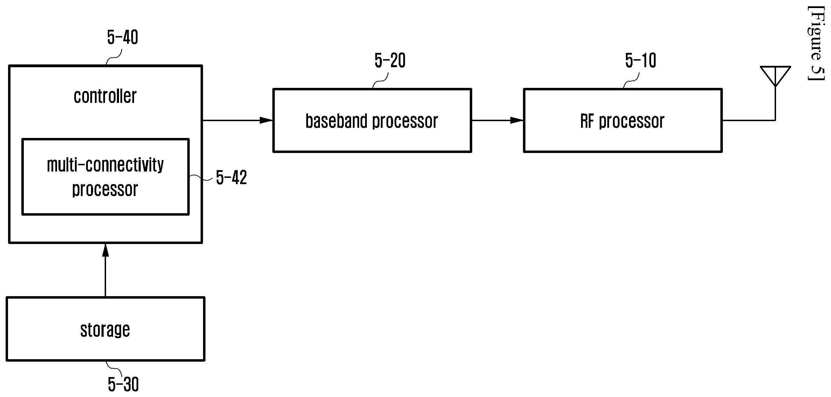

FIG. 5 is a block diagram illustrating a structure of a UE according to an embodiment of the disclosure.

Referring to FIG. 5, the UE may include a radio frequency (RF) processor 5-10, a baseband processor 5-20, a storage 5-30, a controller 5-40, and the like.

The RF processor 5-10 may perform functions for transmitting/receiving signals through a radio channel, such as signal band conversion and amplification. The RF processor 5-10 may up-convert a baseband signal provided from the baseband processor 5-20 to an RF band signal, may transmit the same through an antenna, and may down-convert an RF band signal received through the antenna to a baseband signal. For example, the RF processor 5-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 5-10 may include multiple RF chains. Furthermore, the RF processor 5-10 may perform beamforming. For the beamforming, the RF processor 5-10 may adjust the phase and magnitude of signals transmitted/received through multiple antennas or antenna elements, respectively. In addition, the RF processor may perform MIMO, and may receive multiple layers when performing an MIMO operation.

The baseband processor 5-20 may perform functions of conversion between baseband signals and bitstrings according to the physical layer specifications of the system. For example, during data transmission, the baseband processor 5-20 may encode and modulate a transmitted bitstring to generate complex symbols. In addition, during data reception, the baseband processor 5-20 may demodulate and decode a baseband signal provided from the RF processor 5-10 to restore a received bitstring. For example, when following the orthogonal frequency division multiplexing (OFDM) scheme, during data transmission, the baseband processor 5-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 5-20 may split a baseband signal provided from the RF processor 5-10 at the OFDM symbol level, may restore signals mapped to subcarriers through a fast Fourier transform (FFT) operation, and may restore a received bitstring through demodulation and decoding.

The baseband processor 5-20 and the RF processor 5-10 may transmit and receive signals as described above. Therefore, the baseband processor 5-20 and the RF processor 5-10 may be referred to as a transmitter, a receiver, a transceiver, or a communication unit. Furthermore, at least one of the baseband processor 5-20 and the RF processor 5-10 may include multiple communication modules to support multiple different radio access technologies. In addition, at least one of the baseband processor 5-20 and the RF processor 5-10 may include different communication modules to process signals in different frequency bands. For example, the different radio access technologies may include a wireless LAN (e.g., IEEE 802.11), a cellular network (e.g., LTE), etc. In addition, the different frequency bands may include a super high frequency (SHF) (e.g., 2NRHz) band and a millimeter wave (mmWave) (e.g., 60GHz) band.

The storage 5-30 may store basic programs, application programs, and data, such as configuration information, for the operation of the UE. Particularly, the storage 5-30 may store information regarding a second access node configured to perform wireless communication by using a second radio access technology. In addition, the storage 5-30 may provide the stored data at the request of the controller 5-40.

The controller 5-40 controls the overall operation of the UE. For example, the controller 5-40 may transmit/receive signals through the baseband processor 5-20 and the RF processor 5-10. In addition, the controller 5-40 records data in the storage 5-30 and reads the data from the storage 5-30. To this end, the controller 5-40 may include at least one processor. For example, the controller 5-40 may include a communication processor (CP) configured to perform control for communication, and an application processor (AP) configured to control higher layers such as application programs.

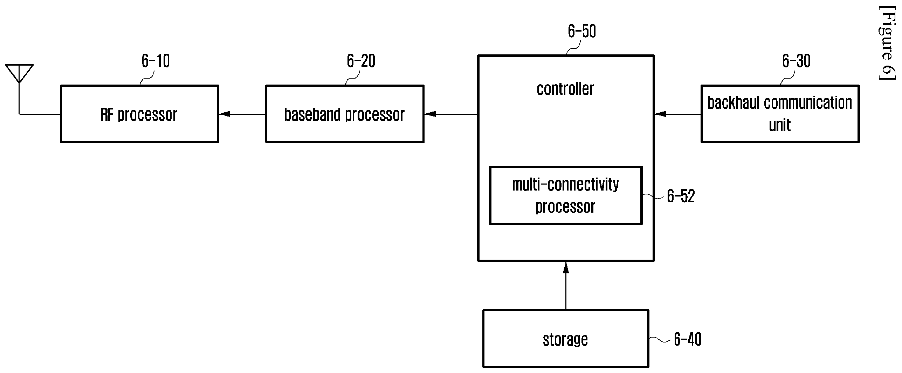

FIG. 6 is a block diagram illustrating a structure of a new radio (NR) base station according to an embodiment of the disclosure.

Referring to FIG. 6, the base station may include an RF processor 6-10, a baseband processor 6-20, a backhaul communication unit 6-30, a storage 6-40, a controller 6-50, and the like.

The RF processor 6-10 may perform functions for transmitting/receiving signals through a radio channel, such as signal band conversion and amplification. The RF processor 6-10 may up-convert a baseband signal provided from the baseband processor 6-20 to an RF band signal, may transmit the same through an antenna, and may down-convert an RF band signal received through the antenna to a baseband signal. For example, the RF processor 6-10 may include a transmission filter, a reception filter, an amplifier, a mixer, an oscillator, a DAC, and an ADC. Although only one antenna is illustrated in the drawing, the first access node may include multiple antennas. In addition, the RF processor 6-10 may include multiple RF chains. Furthermore, the RF processor 6-10 may perform beamforming. For the beamforming, the RF processor 6-10 may adjust the phase and magnitude of signals transmitted/received through multiple antennas or antenna elements, respectively. The RF processor may transmit one or more layers to perform a downlink MIMO operation.

The baseband processor 6-20 may perform functions of conversion between baseband signals and bitstrings according to the physical layer specifications of first radio access technology. For example, during data transmission, the baseband processor 6-20 may encode and modulate a transmitted bitstring to generate complex symbols. In addition, during data reception, the baseband processor 6-20 may demodulate and decode a baseband signal provided from the RF processor 6-10 to restore a received bitstring. For example, when following the OFDM scheme, during data transmission, the baseband processor 6-20 may encode and modulate a transmitted bitstring to generate complex symbols, may map the complex symbols to subcarriers, and may configure OFDM symbols through IFFT operation and CP insertion. In addition, during data reception, the baseband processor 6-20 may split a baseband signal provided from the RF processor 6-10 at the OFDM symbol level, may restore signals mapped to subcarriers through FFT operation, and may restore a received bitstring through demodulation and decoding. The baseband processor 6-20 and the RF processor 6-10 may transmit and receive signals as described above. Therefore, the baseband processor 6-20 and the RF processor 6-10 may be referred to as a transmitter, a receiver, a transceiver, or a communication unit.

The backhaul communication unit 6-30 provides an interface for communicating with other nodes in the network. The backhaul communication unit 6-30 converts bitstrings transmitted from the main base station to other nodes, for example, an auxiliary base station, a core network, etc., into physical signals, and converts physical signals received from the other nodes into bitstrings.

The storage 6-40 may store basic programs, application programs, and data, such as configuration information, for the operation of the main base station. Particularly, the storage 6-40 may store information regarding a bearer allocated to a connected UE, a measurement result reported from the connected UE, and the like. In addition, the storage 6-40 may store information serving as criteria to determine whether to provide multi-connectivity to UEs or to suspend the same. In addition, the storage 6-40 may provide the stored data at the request of the controller 6-50.

The controller 6-50 controls the overall operation of the base station. For example, the controller 6-50 transmits/receives signals through the baseband processor 6-20 and the RF processor 6-10 or through the backhaul communication unit 6-30. In addition, the controller 6-50 records data in the storage 6-40 and reads the data from the storage 6-40. To this end, the controller 6-50 may include at least one processor.

The following terms and abbreviations may be used in this specification.
LTM: L1/L2 triggered mobility
CU: central unit
DU: distributed unit
MCG: master cell group
MN: master node
SCG: secondary cell group
SN: secondary node
S-MN: source MN
S-SN: source SN
C-SN: candidate SN

The disclosure focuses on proposing operations required for a UE to prepare for an inter-CU cell and to perform LTM when performing the LTM. In particular, the disclosure proposes a method for performing LTM on an SCG, that is, a movement of a primary secondary cell (PSCell). Since a conventional LTM operation assumes only an operation within an intra-CU, signaling between inter-nodes is lacking.

As a basic prerequisite, since an LTM execution command is determined (or issued) by a DU, a DU prepared for LTM (candidate DU or target DU) needs to possess at least one of the following as information regarding all candidate cells.
- LTM candidate ID
- Association (mapping) information between LTM candidate ID and corresponding cell ID
- Beam information (TCI state) to be used in each candidate
   ■ In this case, the meaning of "to be used" may encompass all meanings of a beam associated with a random access channel (RACH) occasion when performing downlink (DL) and/or uplink (UL) synchronization and/or a RACH, and/or a beam to be used for first UL data transmission. When necessary, an indicator according to each case may be accompanied (or configured together) to perform a cell switch.
- RACH preamble index
- Synchronization signal block (SSB) index: an index of an SSB used to determine a RACH occasion in each candidate cell, which may indicate an occasion for transmitting a RACH preamble for contention-free random access (CFRA).

The foregoing information is information that needs to be indicated when indicating a cell switch command medium access control (MAC) control element (CE) for a candidate cell determined for the LTM.

As a preparation step before a cell switch, each candidate cell is expected to transmit channel state information (CSI) for LTM, and reference signal (RS) information for the corresponding CSI needs to be possessed by each DU. Before indicating the LTM cell switch, a source DU delivers CSI information about specific candidate cells to a UE, and the UE may perform measurement and reporting of the CSI RS. Upon receiving a CSI measurement result report from the UE, the source DU may determine whether a movement to a corresponding cell is required and/or which beam to use. To this end, each DU may require at least one of the following pieces of information regarding a concerned cell thereof.
- CSI resource configuration for each candidate cell (needed when the source DU delivers an L1 measurement configuration to the UE), individual resource configuration and/or configuration ID for each cell, and CSI resource configuration for LTM.
- CSI report configuration considering CSI resource for each of the candidate cells
   ■ When the candidate DU generates and delivers this information to a CU, the information may be used as a CSI report configuration in a target cell configuration (RRCReconfiguration) of the corresponding concerned cell (i.e., a target cell) generated by the CU.
   ■ That is, when the UE moves to the concerned cell from another cell, the configuration may be used as a CSI report configuration where that cell is a serving cell. The configuration may be intended for inclusion within a target cell configuration (config) without providing a separate L1 configuration for subsequent LTM.
- RACH configuration and lower layer configuration information to be used in the corresponding concerned cell
   ■ The candidate DU may deliver this information to the CU, and thus the information may be generated as a configuration required when performing a RACH within a target cell configuration of the concerned cell and a lower layer configuration to be applied when moving to the corresponding concerned cell and/or a reference configuration including the same, and may be delivered to the UE later.
   ■ In particular, part of the RACH configuration may be used to include RACH preamble index, mask, and occasion determination information in the aforementioned cell switch command MAC CE.

A signaling mechanism between inter-CUs is described based on the information described above.

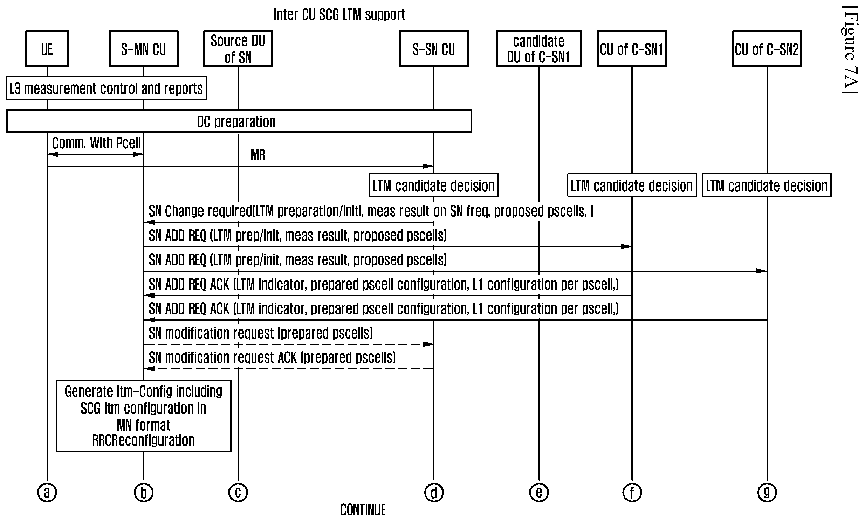

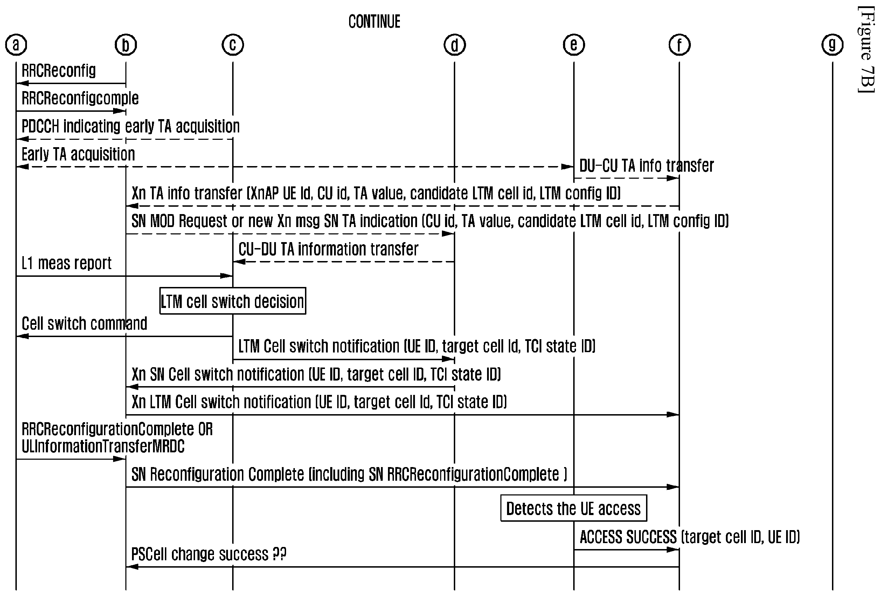

FIG. 7A and FIG. 7B are diagrams illustrating an inter-central unit (CU) secondary cell group (SCG) L1/L2 triggered mobility (LTM) operation according to an embodiment of the disclosure.

An operation in each step of the drawings is as follows.

A user equipment (UE) may be connected to a source master node (MN) (or S-MN CU), may receive a configuration for L3 measurement and/or reporting, and may perform and report measurement on a frequency associated with a secondary node (SN) (L3 measurement control and reports).

Through the above report, the MN (or S-MN CU) may select a candidate PSCell, and perform PSCell and corresponding SCG configuration (SCG config) through an SN addition procedure. Accordingly, the UE may establish a dual connection (DC) with a network (e.g., the S-MN CU, an S-SN DU, and/or an S-SN CU).

Subsequently, when performing measurement according to a configuration of a PCell to configure an LTM configuration to replace a current PSCell, an S-SN (or S-SN CU) may determine an LTM candidate cell. Then, the S-SN may perform LTM preparation.
1. The S-SN (or S-SN CU) may determine an LTM candidate cell (LTM candidate decision), and may deliver information about each LTM candidate cell to each C-SN (e.g., CU-SN1, CU-SN2, and the like) through the MN (or S-MN CU).

More specifically, the S-SN CU may determine a candidate cell, based on a measurement result (or L3 measurement report) received from the UE, and may transmit (or send) information about each candidate cell to at least one C-SN (e.g., CU-SN1, CU-SN2, and the like) that serves each candidate cell through the MN..

The S-SN CU may deliver (or transmit) the information about each candidate cell to the MN (or S-MN CU) through an SN change required message, and the SN change required message may include at least one of the following pieces of information.
A. Indicator indicating preparation and/or initiation of LTM and/or LTM SCG (LTM preparation/initiation)
B. Radio resource management (RRM) measurement result information of UE at frequency of SN band (meas result on SN freq)
C. Information about candidate PSCell existing in C-SN proposed by S-SN (proposed PSCells)
   i. Physical cell identifier (PCI) and/or cell group identifier (CGI) with absolute radio frequency channel number (AFRCN)
   ii. gNB ID of C-SN where each candidate cell exists
D. CSI resource configuration used in cells existing in S-SN among proposed candidate cells
E. Current source DU ID
F. Request for physical random access channel (PRACH) resource used in each candidate cell
G. Request for candidate DU of C-SN to provide lower layer configuration for purpose of generating reference configuration
H. Information for intra-SN LTM already configured [optional], that is, information about LTM candidate cells operated by S-SN and not operated by other SNs
   i. List of candidate PSCell ID confirmed/generated by S-SN
   ii. List of mapping info between LTM config ID and corresponding candidate PSCell ID (above in i) generated by S-SN
   iii. CSI resource configuration per PSCell,
   iv. CSI report configuration per PSCell
   v. TCI states configuration per PSCell
   vi. RACH config of each candidate PSCell
   vii. Lower layer configuration (for generating reference config at each C-SN)
I. Information for S-SNs maintained LTM candidate cells if SN maintains [optional], that is, information about candidate cells on inter-SN maintained by S-SN before UE's preparation step
   i. List of candidate PSCell ID confirmed/generated by S-SN or MN and indicator of MN or SN thereof
   ii. List of mapping info between LTM config ID and corresponding candidate PSCell ID generated by S-SN
   iii. CSI resource configuration per PSCell,
   iv. CSI report configuration per PSCell
   v. TCI states configuration per PSCell
   vi. RACH config of each candidate PSCell
   vii. Lower layer configuration (for generating reference config at each C-SN)

2. Upon obtaining the information about the LTM candidate cells, the MN may perform an SN addition procedure.

More specifically, upon receiving the SN change required message, the MN (or S-MN CU) may perform a separate SN addition procedure for each C-SN (e.g., a CU of C-SN1, a CU of C-SN2, and the like) of each proposed candidate PSCell.

The SN addition procedure may use an SN ADD request message. The SN ADD request message may include and deliver at least one of the following pieces of information for each C-SN (or CU of C-SN1, CU of C-SN2, and the like).
A. Indicator indicating LTM configuration preparation and/or LTM initiation preparation (LTM preparation/initiation indicator): Upon receiving this indicator, the C-SN (or CU of C-SN1, CU of C-SN2, and the like) may request LTM configuration for a given candidate PSCell from a DU serving the PSCell.
B. All proposed candidate PSCells in C-SN
   i. ID of each candidate PSCell (PCI and/or CGI with AFRCN may be used)
   ii. gNB ID of C-SN where each candidate cell exists
   iii. LTM configuration ID allocated by MN or S-SN for each candidate cell
   iv. Request for lower layer configuration for purpose of generating ref config
   v. Request PRACH resource
C. All proposed candidate PSCells in other C-SN including S-SN: This information is not for admission control, but is information about other candidate PSCells that the DU needs to know during a subsequent LTM operation. After the SN addition procedure, the DU may delete these candidate cells except for a final admitted candidate cell.
   i. ID of each candidate PSCell (PCI and/or CGI with AFRCN may be used).
   ii. gNB ID of C-SN where each candidate cell exists
   iii. LTM configuration ID allocated by MN or S-SN for each candidate cell
   iv. CSI resource configuration, TCI state configuration, and RACH configuration in case of proposed candidate cell of S-SN
D. Information for LTM already configured [optional] (following pieces of information regarding candidate PSCells maintained by S-SN including intra-SN and inter-SN in step 1)
   i. List of candidate PSCell ID confirmed/generated by the S-SN or MN and indicator of MN or SN thereof
   ii. List of mapping info between LTM config ID and corresponding candidate PSCell ID generated by S-SN
   iii. CSI resource configuration per PSCell,
   iv. CSI report configuration per PSCell
   v. TCI states configuration per PSCell
   vi. RACH config of each candidate PSCell
   vii. Lower layer configuration (for generating reference config at each C-SN)

3. The C-SN (e.g., the CU of C-SN1, the CU of C-SN2, and the like) may receive the information, and may deliver part or all of the received information to a C-DU (e.g., a candidate DU of C-SN1, a candidate DU of C-SN2, and the like) operating each candidate PSCell.

In this case, an F1 UE context modification message or a setup request message may be used.
A. Current source DU ID information
B. The C-SN may down-select candidate cells corresponding to the C-DU among the proposed candidate cells allocated to the C-SN, and may deliver the corresponding information.
   i. An indicator requesting LTM resource allocation for these cells may be included.
C. Information related to candidate PSCells allocated to DUs other than C-DU and other C-SNs (cell ID, gNB ID, and LTM config ID)
D. Following information regarding remaining LTM candidate PSCells already confirmed
   i. List of candidate PSCell ID confirmed/generated by S-SN or MN and indicator of MN or SN thereof
   ii. List of mapping info between LTM config ID and corresponding candidate PSCell ID generated by S-SN
   iii. CSI resource configuration per PSCell,
   iv. CSI report configuration per PSCell
   v. TCI states configuration per PSCell
   vi. RACH config of each candidate PSCell
   vii. Lower layer configuration (for generating reference config at each C-SN)

4. Upon receiving the information, the C-DU (e.g., the candidate DU of C-SN1 or the candidate DU of C-SN2) may perform the following operation through (or based on) the received information, and may deliver related information to the C-SN. In this case, an F1 UE context set response message and/or a modification response message may be used.
A. The C-DU may determine LTM resource allocation for the proposed candidate PSCells.
   i. Each admitted candidate cell may transmit at least one of the following pieces of information to the C-SN.
      1. Cell ID and/or associated LTM configuration ID
      2. TCI state configuration
      3. RACH configuration
      4. CSI resource configuration
      5. CSI report configuration: This information is determined by referring to information about all other LTM candidate cells below.
      6. Generated lower layer configuration if requested
B. The C-DU may store the cell IDs of all candidate PSCells received from the MN and the mapping of the cells and the LTM configuration IDs.
C. The C-DU may store the following information regarding all LTM candidate cells already confirmed, and may use the same when performing subsequent LTM.
   i. List of candidate PSCell ID confirmed/generated by S-SN or MN and indicator of MN or SN thereof
   ii. List of mapping info between LTM config ID and corresponding candidate PSCell ID generated by S-SN
   iii. CSI resource configuration per PSCell,
   iv. CSI report configuration per PSCell
   v. TCI states configuration per PSCell
   vi. RACH config of each candidate PSCell
   vii. Lower layer configuration (for generating reference config at each C-SN)

5. Upon receiving the information, the C-SN may share the information regarding the admitted candidate cell with other C-DUs in the C-SN. Thus, subsequent LTM may be performed within the C-SN among the candidate cells newly confirmed during this LTM preparation.

6. Upon receiving the information, each C-DU may newly add the CSI resource configuration of the newly confirmed candidate cells, thereby updating the CSI report configuration of the candidate cells operated by the C-DU. The C-DU may deliver the newly updated CSI report configuration of each candidate cell to the C-SN. In addition, the C-DU may deliver the updated lower layer configuration.

7. Each C-SN may deliver the following information to the MN (or S-MN CU). In this case, an SN ADD request acknowledgement message (SN ADD REq ACK message) may be used.
A. PCI and/or LTM candidate configuration ID of admitted candidate PSCell
B. As information for each admitted candidate PSCell
   i. RRCReconfiguration message as target PSCell configuration information including updated lower layer information
   ii. Indicator indicating whether the message is a complete message
   iii. CSI resource configuration
   iv. CSI report configuration
   v. RACH configuration
   vi. TCI state configuration
C. Allocated resources for the accepted PSCells may be maintained until a separate release indicator or cancel indicator is received from the MN or another SN.
D. A reference configuration of the C-SN may be generated and transmitted. The reference configuration may be associated with the gNB ID of the C-SN.

8. The MN (or S-MN CU) may receive the information, and may identify that LTM configuration IDs previously allocated to candidate cells that are not admitted for subsequent reuse. In addition, the MN (or S-MN CU) may store the received information.
A. The MN (or S-MN CU) may transmit (or deliver) information about candidate cells finally admitted in C-SNs other than the MN to all other C-SNs (e.g., the CU of C-SN1, the CU of C-SN2, and the like) including the S-SN. The information about the final admitted candidate cells may include at least one of the following information, and an Xn SN modification request message may be used in this case.
   i. PCI and/or LTM candidate config ID of admitted and/or non-admitted candidate cells
   ii. CSI resource configuration of other C-SNs including admitted candidate cells
   iii. Updated CSI report configuration, TCI state config, and RACH config of candidate cells of each C-SN
B. Upon receiving (obtaining) the information, the C-SN (e.g., the CU of C-SN1, the CU of C-SN2, and the like) may transmit the information back to the C-DU (e.g., the DU of C-SN1, the DU of C-SN2, and the like) thereof to update necessary information.
C. Even though all proposed candidate cells are admitted, the information needs to be transmitted.

9. The MN (or S-MN CU) may generate an ltm-configuration and deliver the same to the UE (generate ltm-Config including an SCG ltm configuration in MN format RRCReconfiguration). More specifically, the MN may generate an ltm config including the SCG ltm configuration, and may deliver the same by including the same in an ltm-Config field within the RRCReconfiguration message.
A. After delivering the information to each SN, the MN (or S-MN CU) may configure the ltm-configuration by using information including a target cell configuration (config) of each candidate cell, and may deliver the same to the UE by including the same in the ltm-Config field within the RRCReconfiguration message. The ltm-config field may include at least one of the following pieces of information.
   i. For each candidate cell
      1. LTM candidate ID
      2. PCI
      3. SSB config
      4. Candidate config with reference ID below
      5. Complete config indicator
      6. DL TCI state info
      7. Using early TA indicator
      8. RACH-less execution indicator
   ii. LTM reference list
      1. Each reference config per C-SN having SN related ID
B. When delivering the ltm-config to the UE, the MN (or S-MN CU) may deliver the same by including the same in the RRCReconfiguration in the MN format. The RRCReconfiguration may be delivered using signaling radio bearer 1 (SRB1).
   i. In particular, a candidate config in the ltm-config may refer to an RRCReconfiguration that includes an RRCReconfiguration generated by each C-SN as an SCG configuration, combined with an additional corresponding MCG configuration.
   ii. When the UE is instructed to switch via an inter-CU cell switch command MAC CE and completes a successful access, the UE may inform the MN (or S-MN CU) using an RRCReconfigurationComplete or ULInformationTransferMRDC message via SRB1 of the MN (or S-MN CU). In this case, an SN RRCReconfigurationComplete message may be encapsulated in the RRCReconfigurationComplete and/or ULInformationTransferMRDC. Subsequently, upon receiving the RRCReconfigurationComplete and/or ULInformationTransferMRDC in which the SN RRCReconfigurationComplete message is encapsulated, the MN (or S-MN CU) may receive an, and may transmit an SN reconfiguration complete message including the SN RRCReconfigurationComplete message to the C-SN (e.g., the CU of C-SN1).
C. The RRCReconfiguration message in the MN format delivered to the UE may include at least one of a master cell group configuration, a secondary cell group configuration, a measurement configuration, a radio bearer configuration, and an LTM configuration. Particularly, the LTM configuration may be configured as a separate field from the other configurations.

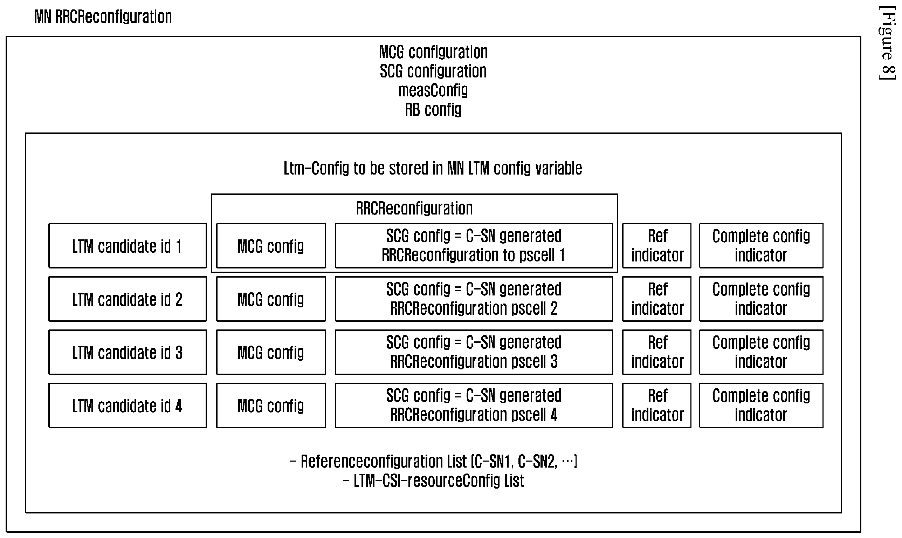

A specific structure of the RRCReconfiguration message in the MN format is described with reference to FIG. 8. In FIG. 8, a field of Ltm-Config is included in the RRCReconfiguration, and pieces of configuration information associated with a single candidate cell may be mapped to a single LTM candidate configuration ID and delivered in the Ltm-Config. The information mapped to each LTM candidate configuration ID may include an RRCReconfiguration to be applied upon moving to a corresponding target PSCell. Further, the information may include an indicator indicating whether the configuration is a complete configuration or a delta configuration, and an index indicator of a reference configuration to be applied if the configuration is the delta configuration. The RRCReconfiguration may include an MCG config and an SCG config, wherein the SCG config is a target PSCell configuration generated by the C-SN through the inter-node signaling, and the MCG config is configuration information on an MCG corresponding to a configuration of the target PSCell and is generated (or prepared) by the MN. A reference configuration may exist as configuration information that is universally applied regardless of the LTM candidate ID, and this reference configuration, which is reference configuration information generated for each C-SN, may be transmitted together with an indicator representing the C-SN.

10. Upon receiving the RRC Reconfiguration message in the MN format, the UE may store the pieces of information of the ltm-config in a UE variable. In addition, when a specific LTM candidate ID is indicated by the serving cell via a cell switch command MAC CE, the UE may perform a switch to a corresponding PSCell by applying a corresponding candidate configuration.

In this case, an early TA acquisition procedure may be performed, and a specific operation of the early TA acquisition procedure may be as follows.
(1) The source DU of the MN may indicate an early TA indicator. More specifically, the source DU of the MN may transmit early TA acquisition via a physical downlink control channel (PDCCH).
(2) Subsequently, the UE may perform an early TA acquisition procedure. More specifically, the UE may transmit a preconfigured RACH preamble to an LTM candidate cell (e.g., the candidate DU of C-SN1) associated with the indicator.
(3) The target C-DU (e.g., the candidate DU of C-SN1) may measure the preamble to estimate a TA value, and may deliver (report) the measured TA value to the C-SN (e.g., the CU of C-SN1) via a DU-CU TA info transfer message.
(4) Subsequently, the C-SN (e.g., the CU of C-SN1) needs to inform the MN (e.g., S-MN CU) of the corresponding information. Here, a new Xn message and/or an Xn TA info transfer message may be used. The Xn message and/or the Xn TA info transfer message may include part or all of the following information.

A. XnAP UE ID, Rach preamble index, C-SN ID, TA value, PCI of corresponding candidate cell, and LTM candidate config ID of corresponding candidate cell

(5) Upon receiving the information, the MN (or S-MN CU) needs to inform the current S-SN (or S-SN CU) of the information. In this case, a new Xn message or an SN MOD request message may be used, and the new Xn message or the SN MOD request message may include the following information.

A. C-SN ID or corresponding gNB CU ID, TA value, candidate LTM cell ID, and LTM config ID

(6) Upon receiving the information, the S-SN (or S-SN CU) may inform an S-DU thereof of the TA value.

The early TA acquisition procedure of (1) to (6) may be omitted. For example, when it is determined based on an L3 measurement value that preamble transmission is highly likely to fail in a cell belonging to a specific CU, the early TA procedure may be omitted. In this case, omission of the early TA procedure may be determined by a candidate SN (inter-CU) and/or the MN (or S-MN CU).

11. If the S-DU (or source DU of the SN) instruct the UE to switch to a certain candidate cell via a cell switch command, the S-DU (or source DU of SN) may inform the S-SN (or S-SN CU) by simultaneously or subsequently delivering an LTM cell switch notification, which is to prevent the S-SN from additionally commanding an L3 PSCell change. Upon receiving this message, the potential target DU (e.g., the candidate DU of C-SN1) may determine whether the UE has performed and completed access through enclosed TCI state information

For a similar operation, the S-SN (or S-SN CU) having received the indication may provide the same indication to the C-DU of the target PSCell through the MN (or S-MN CU). Accordingly, the S-SN (or S-SN CU) may inform the C-SN of the target PSCell by transmitting an Xn SN cell switch notification message (or a corresponding Xn message) to the MN (or S-MN CU).

The Xn SN cell switch notification message (or the corresponding Xn message) may include at least one of an ID of the UE instructed to perform the cell switch (e.g., an Xn AP UE ID or a corresponding GUPI, SUPI, and the like), a target cell ID (LTM candidate ID, PCI, or CGI with AFRCN), and a TCI state ID.

12. Upon receiving the information, the MN (or S-MM CU) may inform the C-SN of the target PSCell by using an Xn LTM cell switch notification (or a corresponding Xn unidirectional message).

The Xn LTM cell switch notification (or the corresponding Xn unidirectional message) may include at least one of the UE ID, the target cell ID, and the TCI state ID, similarly to the Xn SN cell switch notification message (or the corresponding Xn message).

Although not illustrated in the drawings, the S-SN (or S-SN CU) may directly deliver the same indication (or information or notification regarding the LTM sell switch) to the C-CN1 without passing through the MN. In this case, the indication may be delivered through a separate Xn message.

Upon receiving the message, the C-SN (e.g., the CU of C-SN1 or the like) may inform the DU operating the target cell of the content. Based on this content, the target C-DU may detect the access of the UE, and determine success and/or failure of the access.

13. The C-SN (e.g., C-SN1 CU) that recognizes the LTM success of the UE may inform the MN (S-MN CU) of the content (or information about the success and/or failure of the access of the UE) through an Xn message. The Xn message may include PSCell change success, and the Xn message (or PSCell change success message) may include at least one of the UE ID, the target cell ID, and the used TCI state ID.

FIG. 8 is a diagram illustrating the structure of a radio resource control (RRC) reconfiguration message according to an embodiment of the disclosure.

A RRCReconfiguration message in an MN format transmitted to a UE may include a master cell group (MCG) configuration, a secondary cell group (SCG) configuration, a measurement configuration (measConfig), a radio bearer configuration (RBconfig), and an l1/l2 triggered mobility configuration (LTM config). Particularly, the LTM configuration (LTM config) may be configured as a separate field from the foregoing MCG configuration, SCG configuration, measConfig, and RB config.

Referring to FIG. 8, the RRCReconfiguration may include a field of Ltm-Config. In the Ltm-Config, pieces of configuration information associated with a single candidate cell may be mapped to a single LTM candidate configuration ID (e.g., LTM candidate id1, LTM candidate id2, LTM candidate id3, LTM candidate id4, and the like) and delivered. The information mapped to the LTM candidate configuration ID may include an RRCReconfiguration to be applied upon moving to a corresponding target PSCell. Further, the information may include an indicator indicating whether the configuration is a complete configuration or a delta configuration, and an index indicator of a reference configuration to be applied if the configuration is the delta configuration.

The RRCReconfiguration to be applied upon moving to the target PSCell may include an MCG config and an SCG config. The MCG config is configuration information on an MCG corresponding to a configuration of the target PSCell, and is configured (or generated) by an MN. The SCG config is a target PSCell configuration generate by a C-SN through the inter-node signaling.

In addition, the Ltm-Config may include a reference configuration. The reference configuration is configuration information that is universally applied regardless of the LTM candidate ID, and reference configuration information generated for each C-SN may be transmitted together with an indicator.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

In addition, the programs may be stored in an attachable storage device which is accessible to the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a source master node (S-MN) in a communication system, the method comprising:
receiving, from a central unit (CU) of at least one candidate secondary node (C-SN), secondary cell group (SCG) configuration information of a layer 1 (L1)/layer 2 (L2) triggered mobility (LTM) candidate primary secondary cell (PSCell) corresponding to each CU of the at least C-SN;
generating and transmitting, to a terminal, a first radio resource control (RRC) reconfiguration message comprising the SCG configuration information of the LTM candidate PSCell corresponding to each CU of the at least one C-SN and master cell group (MCG) configuration information; and
receiving, from the terminal, an MN RRC reconfiguration complete message comprising an SN RRC reconfiguration complete message, based on the RRC reconfiguration message.

2. The method of claim 1, further comprising:
determining whether to change an LTM cell, based on an L1 measurement result received from the terminal; and
transmitting a cell switch command media access control (MAC) control element (CE) comprising an identifier (ID) of a specific LTM candidate cell to the terminal.

3. The method of claim 1, further comprising
receiving a secondary node (SN) change required message comprising at least one LTM candidate cell information from a CU of a source secondary node (S-SN).

4. The method of claim 3, further comprising:
receiving at least one of channel state information (CSI)-related configuration information or transmission configuration indicator (TCI) configuration information from the CU of the at least one C-SN; and
transmitting at least one of the received CSI-related configuration information or TCI configuration information to the CU of the S-SN.

5. The method of claim 1, wherein the first RRC reconfiguration message comprises an identifier of the LTM candidate PSCell and a second RRC reconfiguration message to be applied when changing an LTM cell to the LTM candidate PSCell, and
wherein the second RRC reconfiguration message comprises the SCG configuration information of the LTM candidate PSCell and the MCG configuration information.

6. A method performed by a terminal in a communication system, the method comprising:
receiving, from a source master node (S-MN), a first radio resource control (RRC) reconfiguration message comprising secondary cell group (SCG) configuration information of a layer 1 (L1)/layer 2 (L2) triggered mobility (LTM) candidate primary secondary cell (PSCell) corresponding to each central unit (CU) of at least one candidate secondary node (C-SN) and master cell group (MCG) configuration information; and
transmitting, to a CU of S-MN, an MN RRC reconfiguration complete message comprising an SN RRC reconfiguration complete message, based on the RRC reconfiguration message.

7. The method of claim 6, further comprising:
reporting a result of L1 measurement for at least one LTM candidate cell to the S-MN;
receiving a cell switch command media access control (MAC) control element (CE) comprising an identifier (ID) of a specific LTM candidate cell from the S-MN; and
changing to the specific LTM candidate cell, based on the first RRC reconfiguration message and the MAC CE.

8. The method of claim 6, wherein the first RRC reconfiguration message comprises an identifier of the LTM candidate PSCell and a second RRC reconfiguration message to be applied when changing an LTM cell to the LTM candidate PSCell, and
wherein the second RRC reconfiguration message comprises the SCG configuration information of the LTM candidate PSCell and the MCG configuration information.

9. A source master node (S-MN) in a communication system, the S-MN comprising:
a transceiver configured to transmit and receive a signal; and
a controller,
wherein the controller is configured to:
receive, from a central unit (CU) of at least one candidate secondary node (C-SN), secondary cell group (SCG) configuration information of a layer 1 (L1)/layer 2 (L2) triggered mobility (LTM) candidate primary secondary cell (PSCell) corresponding to each CU of the at least C-SN;
generate and transmit, to a terminal, a first radio resource control (RRC) reconfiguration message comprising the SCG configuration information of the LTM candidate PSCell corresponding to each CU of the at least one C-SN and master cell group (MCG) configuration information; and
receive, from the terminal, an MN RRC reconfiguration complete message comprising an SN RRC reconfiguration complete message, based on the RRC reconfiguration message.

10. The S-MN of claim 9, wherein the controller is configured to:
determine whether to change an LTM cell, based on an L1 measurement result received from the terminal; and
transmit a cell switch command media access control (MAC) control element (CE) comprising an identifier (ID) of a specific LTM candidate cell to the terminal.

11. The S-MN of claim 9, wherein the controller is configured to:
receive a secondary node (SN) change required message comprising at least one LTM candidate cell information from a CU of a source secondary node (S-SN).

12. The S-MN of claim 9, wherein the controller is configured to:
receive at least one of channel state information (CSI)-related configuration information or transmission configuration indicator (TCI) configuration information from the CU of the at least one C-SN; and
transmit at least one of the received CSI-related configuration information or TCI configuration information to the CU of the S-SN.

13. The S-MN of claim 9, wherein the first RRC reconfiguration message comprises an identifier of the LTM candidate PSCell and a second RRC reconfiguration message to be applied when changing an LTM cell to the LTM candidate PSCell, and
wherein the second RRC reconfiguration message comprises the SCG configuration information of the LTM candidate PSCell and the MCG configuration information.

14. A terminal in a communication system, the terminal comprising:
a transceiver configured to transmit and receive a signal; and
a controller,
wherein the controller is configured to:
receive, from a source master node (S-MN), a first radio resource control (RRC) reconfiguration message comprising secondary cell group (SCG) configuration information of a layer 1 (L1)/layer 2 (L2) triggered mobility (LTM) candidate primary secondary cell (PSCell) corresponding to each central unit (CU) of at least one candidate secondary node (C-SN) and master cell group (MCG) configuration information; and
transmit, to a CU of S-MN, an MN RRC reconfiguration complete message comprising an SN RRC reconfiguration complete message, based on the RRC reconfiguration message.

15. The terminal of claim 14, wherein the controller is configured to:
report a result of L1 measurement for at least one LTM candidate cell to the S-MN;
receive a cell switch command media access control (MAC) control element (CE) comprising an identifier (ID) of a specific LTM candidate cell from the S-MN; and
change to the specific LTM candidate cell, based on the first RRC reconfiguration message and the MAC CE,
wherein the first RRC reconfiguration message comprises an identifier of the LTM candidate PSCell and a second RRC reconfiguration message to be applied when changing an LTM cell to the LTM candidate PSCell, and
wherein the second RRC reconfiguration message comprises the SCG configuration information of the LTM candidate PSCell and the MCG configuration information.
